(19) Europäisches Patentamt / European Patent Office / Office européen des brevets

(11) **EP 3 398 992 B1**

(12) **EUROPEAN PATENT SPECIFICATION**

(45) Date of publication and mention
of the grant of the patent:
**10.03.2021 Bulletin 2021/10**

(21) Application number: **16881823.5**

(22) Date of filing: **28.12.2016**

(51) Int Cl.:
*C08L 29/04* *(2006.01)*     *B32B 15/08* *(2006.01)*
*B32B 27/28* *(2006.01)*     *B65D 65/40* *(2006.01)*
*C08K 3/32* *(2006.01)*     *B65D 8/00* *(2006.01)*
*C08K 3/11* *(2018.01)*

(86) International application number:
**PCT/JP2016/089124**

(87) International publication number:
**WO 2017/115849 (06.07.2017 Gazette 2017/27)**

(54) **ETHYLENE-VINYL ALCOHOL COPOLYMER COMPOSITION, MULTILAYERED STRUCTURE USING SAME, AND PACKAGE FOR HOT-WATER STERILIZATION TREATMENT**

ETHYLEN-VINYLALKOHOL-COPOLYMER-ZUSAMMENSETZUNG, MEHRSCHICHTIGE STRUKTUR DAMIT UND VERPACKUNG FÜR HEISSWASSERSTERILIISATIONSBEHANDLUNG

COMPOSITION DE COPOLYMÈRE D'ÉTHYLÈNE ALCOOL DE VINYLE, STRUCTURE MULTICOUCHE L'UTILISANT, ET EMBALLAGE DE TRAITEMENT DE STÉRILISATION À L'EAU CHAUDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.12.2015 JP 2015255785**

(43) Date of publication of application:
**07.11.2018 Bulletin 2018/45**

(73) Proprietor: **Mitsubishi Chemical Corporation**
**Tokyo 1008251 (JP)**

(72) Inventors:
• **NISHIMURA Daichi**
**Tokyo 100-8251 (JP)**
• **NAKAJIMA Takuya**
**Tokyo 100-8251 (JP)**

• **TANIGUCHI Masahiko**
**Tokyo 100-8251 (JP)**
• **YAMADA Koji**
**Tokyo 100-8251 (JP)**

(74) Representative: **Kuhnen & Wacker**
**Patent- und Rechtsanwaltsbüro PartG mbB**
**Prinz-Ludwig-Straße 40A**
**85354 Freising (DE)**

(56) References cited:
EP-A1- 3 398 990     WO-A1-2008/149642
WO-A1-2013/146533     JP-A- H07 330 994
JP-A- 2000 136 281     JP-A- 2001 115 274
JP-A- 2001 347 612

**Description**

TECHNICAL FIELD

The present disclosure relates to an ethylene-vinyl alcohol copolymer composition (wherein an ethylene-vinyl alcohol copolymer is hereinafter referred to simply as "EVOH resin") and, more specifically, to an EVOH resin composition having an excellent adhesive property with respect to a metal surface. The present disclosure further relates to a multilayer structure produced by using the EVOH resin composition, and to a hot-water sterilizable package.

BACKGROUND ART

EVOH resin is a thermoplastic resin prepared by saponifying an ethylene-vinyl ester copolymer, which is a copolymer of ethylene and a vinyl ester monomer. EVOH resin is excellent in transparency, gas barrier property (e.g., oxygen barrier property), solvent resistance, oil resistance, mechanical strength, and the like.

Incidentally, metal products to be used for various piping materials and civil engineering construction materials are liable to corrode when being exposed in air, ground and sea unless their surfaces are subjected to anticorrosion treatment. Therefore, the surface of such a metal product is generally coated with a polyolefin or other resin.

However, polyolefin and the like problematically have higher oxygen permeability. Therefore, the surface of the metal product is liable to be oxidized with oxygen penetrating through a coating layer to corrode over time or in a high temperature environment.

To cope with this, it is proposed that an ethylene-vinyl alcohol copolymer excellent in oxygen barrier property is used as the resin for coating the metal product. Further, it is proposed to impart the metal product with a specific surface geometry in order to increase the adhesive strength between the surface of the metal product and the coating layer of the ethylene-vinyl alcohol copolymer (see, for example, PTL 1).

RELATED ART DOCUMENT

PATENT DOCUMENT

PTL 1: JP-A-2012-206318

SUMMARY OF INVENTION

The art disclosed in PTL 1 needs a surface roughening process such as a blasting process or a metal spraying process for roughening the surface of the metal product. This art is disadvantageous with the need for such a metal processing process and, in addition, is problematically inapplicable to a case in which the surface of the metal product is required to have metallic luster.

The present disclosure provides an EVOH resin composition which has an excellent adhesive property with respect to a metal surface without any limitation to the surface geometry of the metal surface, a multilayer structure produced by using the EVOH resin composition, and a hot-water sterilizable package.

In view of the foregoing, the inventors conducted intensive studies and, as a result, found that the problems can be solved by an EVOH resin composition that contains 0.01 to 100 ppm of an iron compound on a metal basis based on the weight of thee EVOH resin composition and 1 to 100 ppm of a phosphoric acid compound (B) on a phosphorus basis based on the weight of the EVOH resin composition.

According to a first inventive aspect, there is provided an EVOH resin composition that contains: (A) an EVOH resin; (B) a phosphoric acid compound; and an iron compound; wherein the iron compound is present in a proportion of 0.01 to 100 ppm on a metal basis based on the weight of the EVOH resin composition; wherein the phosphoric acid compound (B) is present in a proportion of 1 to 100 ppm on a phosphorus basis based on the weight of the EVOH resin composition.

According to a second inventive aspect, there is provided a multilayer structure that includes a laminate unit including at least a layer containing the EVOH resin composition of the first inventive aspect and a layer containing a metal component as a main component.

According to a third inventive aspect, there is provided a hot-water sterilizable package that includes the multilayer structure of the second inventive aspect.

The inventive EVOH resin composition has an excellent adhesive property with respect to a metal surface and, therefore, can be advantageously used as a surface coating material for coating various pipes for supplying oil, gas, water, and the like, and metal products for civil engineering construction materials.

DESCRIPTION OF EMBODIMENTS

The present disclosure will hereinafter be described in detail by way of preferred embodiments thereof. However, it should be understood that these preferred embodiments are illustrative of the disclosure but not limitative of the disclosure.

The inventive EVOH resin composition contains an EVOH resin (A) as a main component, a specific proportion of an iron compound, and a specific proportion of a phosphoric acid compound (B).

These components will hereinafter be described in detail.

[EVOH resin (A)]

The EVOH resin (A) to be used in the present disclosure is generally a water-insoluble thermoplastic resin prepared by saponifying an ethylene-vinyl ester copolymer, which is a copolymer of ethylene and a vinyl ester monomer.

Vinyl acetate is typically used as the vinyl ester monomer for economy.

Known polymerization methods such as a solution polymerization method, a suspension polymerization method, and an emulsion polymerization method may be used for the polymerization. A solution polymerization method using methanol as a solvent is generally used. The resulting ethylene-vinyl ester copolymer may be saponified by a known method.

The EVOH resin thus prepared mainly contains an ethylene structural unit and a vinyl alcohol structural unit, and further contains a very small amount of a vinyl ester structural unit that remains unsaponified.

A typical example of the vinyl ester monomer is vinyl acetate, which is easily commercially available and ensures a higher impurity treatment efficiency in the production process. Other examples of the vinyl ester monomer include aliphatic vinyl esters such as vinyl formate, vinyl propionate, vinyl valerate, vinyl butyrate, vinyl isobutyrate, vinyl pivalate, vinyl caprate, vinyl laurate, vinyl stearate, and vinyl versatate, and aromatic vinyl esters such as vinyl benzoate. The aliphatic vinyl esters typically have 3 to 20 carbon atoms, preferably 4 to 10 carbon atoms, particularly preferably 4 to 7 carbon atoms. These vinyl esters may be used alone or, as required, a plurality of vinyl esters may be selected from these vinyl esters to be used in combination.

The EVOH resin (A) typically has an ethylene structural unit content of 20 to 60 mol %, preferably 25 to 50 mol %, particularly preferably 25 to 35 mol %, which may be controlled by adjusting the pressure of ethylene in the copolymerization of the vinyl ester monomer and ethylene. If the ethylene structural unit content is excessively low, the EVOH resin tends to be poorer in high-humidity gas barrier property and melt formability. If the ethylene structural unit content is excessively high, on the other hand, the EVOH resin tends to be poorer in gas barrier property.

The ethylene content may be measured in conformity with ISO14663.

The EVOH resin (A) typically has a vinyl ester saponification degree of 90 to 100 mol %, preferably 95 to 100 mol %, particularly preferably 99 to 100 mol %, which may be controlled by adjusting the amount of a saponification catalyst (typically, an alkaline catalyst such as sodium hydroxide), the temperature and the period for the saponification of the ethylene-vinyl ester copolymer. If the saponification degree is excessively low, the EVOH resin tends to be poorer in gas barrier property, heat stability, and moisture resistance.

The saponification degree of the EVOH resin may be measured in conformity with JIS K6726 (by using a solution prepared by homogenously dissolving the EVOH resin in a water/methanol solvent).

The EVOH resin (A) typically has a melt flow rate (MFR) of 0.5 to 100 g/10 minutes, preferably 1 to 50 g/10 minutes, further preferably 3 to 35 g/10 minutes, particularly preferably 8 to 15 g/10 minutes (as measured at 210°C with a load of 2160 g). If the MFR is excessively great, the EVOH resin tends to be unstable in a film forming process. If the MFR is excessively small, the EVOH resin tends to have a higher viscosity, resulting in difficulty in melt extrusion.

The MFR is an index of the polymerization degree of the EVOH resin, and may be controlled by adjusting the amount of a polymerization initiator and the amount of a solvent in the copolymerization of ethylene and the vinyl ester monomer.

The EVOH resin (A) to be used in the present disclosure may further contain a structural unit derived from any of the following comonomers in a proportion that does not impair the effects of the present disclosure (e.g., in a proportion of not greater than 10 mol %).

The comonomers include: olefins such as propylene, 1-butene and isobutene, hydroxyl-containing α-olefins such as 3-buten-1-ol, 3-butene-1,2-diol, 4-penten-1-ol, and 5-hexene-1,2-diol, and esterification products, acylation products, and other derivatives of these olefins; hydroxyalkyl vinylidenes such as 2-methylenepropane-1,3-diol and 3-methylenepentane-1,5-diol; hydroxyalkyl vinylidene diacetates such as 1,3-diacetoxy-2-methylenepropane, 1,3-dipropionyloxy-2-methylenepropane, and 1,3-dibutyroyloxy-2-methylenepropane; unsaturated acids such as acrylic acid, methacrylic acid, crotonic acid, (anhydrous) phthalic acid, (anhydrous) maleic acid, and (anhydrous) itaconic acid, and salts and C1 to C18 monoalkyl and dialkyl esters of these unsaturated acids; acrylamide compounds such as acrylamide, C1 to C18 N-alkylacrylamides, N,N-dimethylacrylamide, 2-acrylamidopropanesulfonic acid, and salts thereof, and acrylamidopropyldimethylamine and acid salts and quaternary salts thereof; methacrylamide compounds such as methacrylamide, C1 to C18 N-alkylmethacrylamides, N,N-dimethylmethacrylamide, 2-methacrylamidopropanesulfonic acid, and salts thereof, and methacrylamidopropyldimethylamine and acid salts and quaternary salts thereof; N-vinylamides such as N-vinylpyrrolidone, N-vinylformamide and N-vinylacetamide; cyanated vinyl compounds such as acrylonitrile and methacrylonitrile; vinyl ethers such as C1 to C18 alkyl vinyl ethers, hydroxyalkyl vinyl ethers and alkoxyalkyl vinyl ethers; halogenated vinyl compounds such as vinyl chloride, vinylidene chloride, vinyl fluoride, vinylidene fluoride and vinyl bromide; vinylsilanes such as trimethoxyvinylsilane; halogenated allyl compounds such as allyl acetate and allyl chloride; allyl alcohol compounds such as allyl alcohol and dimethoxyallyl alcohol; and trimethyl-(3-acrylamido-3-dimethylpropyl)-ammonium chloride and acrylamido-2-methylpropanesulfonic acid, which may be used alone or in combination.

A post-modified EVOH resin such as an urethanized, acetalized, cyanoethylated, or oxyalkylenated EVOH resin may be used as the EVOH resin.

Particularly, the EVOH resin prepared by the copolymerization with any of the hydroxyl-containing $\alpha$-olefins is preferred for excellent secondary formability. An EVOH resin having a 1,2-diol structure at its side chain is particularly preferred.

The EVOH resin (A) to be used in the present disclosure may be a mixture of different EVOH resins. These EVOH resins may have different saponification degrees and different polymerization degrees, and contain different comonomer components.

The inventive EVOH resin composition contains the EVOH resin (A) as the main component, a specific proportion of the iron compound, and a specific proportion of the phosphoric acid compound (B).

[Iron Compound]

The iron compound should be present in a proportion of 0.01 to 100 ppm, preferably 0.1 to 90 ppm, particularly preferably 1 to 80 ppm, further preferably 3 to 70 ppm, especially preferably 10 to 50 ppm, on a metal basis based on the weight of the EVOH resin composition.

If the proportion of the iron compound is excessively small, the EVOH resin composition tends to have an insufficient adhesive property with respect to the metal surface. If the proportion of the iron compound is excessively great, the EVOH resin composition is liable to be colored, resulting in a problem during use.

The proportion of the iron compound may be determined by treating the EVOH resin composition with an acid such as dilute sulfuric acid or chloric acid, adding pure water to the resulting solution to a predetermined volume to prepare a sample solution, and analyzing the sample solution by atomic absorption spectrometry.

Examples of the iron compound to be contained in the EVOH resin composition include ferric oxide, ferrosoferric oxide, ferrous chloride, ferric chloride, ferrous hydroxide, ferric hydroxide, ferrous oxide, iron sulfate, and iron phosphate, which may be each present in the form of an iron salt, in an ionized form or in the form of a complex coordinated with the resin or other ligands in the EVOH resin composition.

In the present disclosure, exemplary methods for producing an EVOH resin composition containing a specific amount of the iron compound include: (i) a method that includes the steps of adding the iron compound to a homogeneous solution (water/alcohol solution or the like) of the EVOH resin (A), extruding the resulting solution into a strand form in a solidification liquid, cutting the resulting strands into pellets, and drying the pellets in a process for producing the EVOH resin (A); (ii) a method that includes the steps of keeping pellets of the EVOH resin (A) in contact with an aqueous solution of the iron compound to introduce the iron compound into the pellets of the EVOH resin (A), and drying the resulting pellets; (iii) a method that includes the steps of dry-blending pellets of the EVOH resin (A) and the iron compound, and melt-kneading the resulting mixture; and (iv) a method that includes the steps of adding a predetermined amount of the iron compound to a melt of the EVOH resin (A), and melt-kneading the resulting mixture.

Particularly, the method (ii) is preferred because the EVOH resin composition produced by the method (ii) ensures more remarkable effects of the present disclosure without the need for an additional production step.

The pellets to be produced by the method (i) and the pellets to be used in the methods (ii) and (iii) may each have, for example, a spherical shape, a cylindrical shape, a cubic shape, an elongated cubic shape, or the like. The pellets typically each have a generally spherical shape (rugby ball shape) or a cylindrical shape. The spherical pellets typically each have a diameter of 1 to 6 mm and a height of 1 to 6 mm, preferably a diameter of 2 to 5 mm and a height of 2 to 5 mm, and the cylindrical pellets typically each have a bottom face diameter of 1 to 6 mm and a length of 1 to 6 mm, preferably a bottom face diameter of 2 to 5 mm and a length of 2 to 5 mm, for easy handling thereof as a forming material.

The iron compound to be used in the methods (i), (iii), and (iv) is preferably a water-soluble iron compound. Examples of the water-soluble iron compound include iron salts (inorganic acid salts and the like) such as ferric oxide, ferrosoferric oxide, ferrous chloride, ferric chloride, ferrous hydroxide, ferric hydroxide, ferrous oxide, iron sulfate, iron sulfide, iron nitrate, and iron phosphate, which may be each present in the form of a salt, in an ionized form or in the form of a complex coordinated with the resin or other ligands in the EVOH resin (A).

Usable as the aqueous solution of the iron compound in the method (ii) are an aqueous solution of any of the water-soluble iron compounds out of the aforementioned iron compounds, and an aqueous solution that contains iron ions leached out of a steel material immersed in water containing a chemical agent. In this case, the proportion of the iron compound (iron ions) in the EVOH resin (A) may be controlled by adjusting the concentration of the iron compound (iron ions) in the aqueous solution in which the EVOH resin pellets are immersed, the immersion temperature, the immersion period, and/or the like. The immersion period is typically 0.5 to 48 hours, preferably 1 to 36 hours, and the immersion temperature is typically 10°C to 40°C, preferably 20°C to 35°C.

The pellets are separated from the aqueous solution by a known method, and dried by a known drying method. Various drying methods are usable for the drying, and examples of the drying methods include a stationary drying method and a fluidized drying method, which may be used alone or in combination.

[Phosphoric Acid Compound (B)]

Examples of the phosphoric acid compound (B) include salts and esters of phosphoric acid, phosphorous acid, and hypophosphorous acid. Particularly, phosphates such as a primary phosphate, a secondary phosphate, and a tertiary phosphate are preferred. Exemplary cationic moieties include alkali metals such as sodium, potassium and lithium, and alkali earth metals such as magnesium, calcium and barium. Particularly, sodium and potassium are preferred. Specific preferred examples of the phosphoric acid compound (B) include sodium dihydrogen phosphate, potassium dihydrogen phosphate, disodium hydrogen phosphate, and dipotassium hydrogen phosphate.

The proportion of the phosphoric acid compound (B) to be contained in the inventive EVOH resin composition is preferably 1 to 100 ppm, particularly preferably 3 to 90 ppm, especially preferably 5 to 80 ppm, on a phosphorus basis based on the weight of the EVOH resin composition. If the proportion of the phosphoric acid compound (B) is excessively small, the EVOH resin composition is liable to have an insufficient adhesive property with respect to the metal surface. If the proportion of the phosphoric acid compound (B) is excessively great, on the other hand, a product formed from the EVOH resin composition is liable to suffer from gelation and fisheyes.

The proportion of the phosphoric acid compound (B) is determined in conformity with JIS K0102(2008) by decomposing the EVOH resin composition with the use of nitric acid and sulfuric acid, analyzing the decomposed product by the molybdenum blue absorption photometry, and converting the resulting measurement value to a phosphorus content (ppm) of the EVOH resin composition pellets.

[EVOH Resin Composition]

Exemplary methods for producing the inventive EVOH resin composition include: ($\alpha$) a method that includes the steps of adding a predetermined amount of the phosphoric acid compound to a homogeneous solution (water/alcohol solution or the like) of the EVOH resin (A) produced as containing the predetermined proportion of the iron compound by the aforementioned production method, extruding the resulting solution into a strand form in a solidification liquid, cutting the resulting strands into pellets, and drying the pellets; ($\beta$) a method that includes the steps of keeping the pellets of the EVOH resin (A) produced as containing the predetermined proportion of the iron compound by the aforementioned production method in contact with an aqueous solution of the phosphoric acid compound (B) to introduce the phosphoric acid compound (B) in a predetermined proportion into the EVOH resin (A), and drying the resulting pellets; ($\gamma$) a method that includes the steps of dry-blending the pellets of the EVOH resin (A) produced as containing the predetermined proportion of the iron compound by the aforementioned production method and a predetermined amount of the phosphoric acid compound (B), and melt-kneading the resulting mixture; and ($\delta$) a method that includes the steps of adding a predetermined amount of the phosphoric acid compound (B) to a melt of the EVOH resin (A), and melt-kneading the resulting mixture.

Particularly, the method ($\beta$) is preferred because the EVOH resin composition produced by the method ($\beta$) ensures more remarkable effects of the present disclosure without the need for an additional production step.

The step of introducing the phosphoric acid compound (B) into the EVOH resin (A) may be performed simultaneously with the step of introducing the iron compound into the EVOH resin (A), and this method is preferred for simplification of the production method. More specifically, the pellets of the EVOH resin (A) are immersed in an aqueous solution containing the iron compound and the phosphoric acid compound (B) to be kept in contact with the aqueous solution, whereby the iron compound and the phosphoric acid compound (B) are introduced into the pellets of the EVOH resin (A) as desired. Then, the resulting pellets are dried. Thus, pellets of the inventive EVOH resin composition are produced.

The inventive EVOH resin composition typically has a water content of 0.01 to 0.5 wt.%, preferably 0.05 to 0.35 wt.%, particularly preferably 0.1 to 0.3 wt.%. The EVOH resin composition pellets are typically subjected to a known melt forming process. If the water content is excessively high, the EVOH resin composition is liable to be foamed in the melt forming process. If the water content is excessively low, the EVOH resin composition is liable to be thermally degraded due to excessive drying.

In the present disclosure, the water content of the EVOH resin composition is measured and calculated in the following manner.

The weight ($W_1$) of the EVOH resin composition is measured by an electronic balance, and the EVOH resin composition is dried at 150°C for 5 hours in a hot air dryer and cooled for 30 minutes in a desiccator. Then, the weight ($W_2$) of the resulting pellets is measured. The water content of the EVOH resin composition is calculated from the following expression:

$$\text{Water content (wt.\%) = } [(W_1 - W_2)/W_1] \times 100$$

In the aforementioned manner, the inventive EVOH resin composition is produced.

The inventive EVOH resin composition may further contain additives that are generally added to the EVOH resin, as long as the effects of the present disclosure are not impaired.

The inventive EVOH resin composition thus produced is used as a coating material for coating a surface of a metal product. The inventive EVOH resin composition prevents the corrosion of the metal surface due to the oxygen gas barrier property of the EVOH resin, and has an excellent adhesive property with respect to the metal surface.

The surface of the metal product may be coated with the inventive EVOH resin composition by a known method. Exemplary methods for the coating include: a method that includes the steps of melting the EVOH resin composition, and spreading the resulting EVOH resin composition melt over the metal surface; a method that includes the steps of powdering the EVOH resin composition, applying the resulting EVOH resin composition powder onto the metal surface, and heating and fusing the EVOH resin composition powder on the metal surface; and a method that includes the steps of dissolving the EVOH resin composition in a solvent, spraying or applying the resulting solution on the metal surface or immersing the metal product in the solution, and drying off the solvent.

Usable as a material for the metal product are various metals. Examples of the metals include iron, various stainless-steel materials, aluminum, copper, zinc, tin, titanium, silver, zirconium, cobalt, chromium, molybdenum, tungsten, manganese and gold, and alloys of these metals.

Further, the inventive EVOH resin composition has an excellent adhesive property with respect to a film containing a metal component as a main component. The film containing the metal component as the main component typically contains the metal component in a proportion of not less than 30 wt.%, preferably not less than 50 wt.%, on a metal basis based on the weight of the film. Examples of the film include a vapor deposition film produced by evaporating any of the aforementioned metals on a surface of a thermoplastic resin film, a transparent gas barrier film made of a reaction product of aluminum oxide particles and a phosphorus compound as disclosed in WO2011/122036, and an organic/inorganic hybrid gas barrier film formed from a vinyl alcohol resin and a metal compound such as an alkoxide or an oxide of any of the aforementioned metals by a sol-gel method.

The inventive EVOH resin composition is useful for a multilayer structure including any of the aforementioned films. A multilayer structure having a laminate unit including at least a layer containing the inventive EVOH resin composition and the film containing the metal component as the main component is excellent in interlayer adhesive force and gas barrier property. The multilayer structure is useful for a food package and a pharmaceutical product package. Particularly, the multilayer structure is useful for a hot-water sterilizable package that is otherwise liable to suffer from reduction in interlayer adhesive force during a hot-water sterilization process.

EXAMPLES

The present disclosure will hereinafter be described more specifically by way of examples thereof. However, it should be understood that the present disclosure be not limited to the examples within the scope of the present disclosure.

In the following examples, "parts" means "parts by weight" unless otherwise specified.

<Example 1>

Pellets of an EVOH resin (A) having an ethylene structural unit content of 44 mol %, a saponification degree of 99.6 mol %, an MFR of 12 g/10 minutes (as measured at 210°C with a load of 2160 g) and a water content of 55 wt.% were immersed in an aqueous solution containing 30 ppm of an iron compound (iron ions) on a metal basis and 74 ppm of a phosphoric acid (B) on a phosphorus basis. This aqueous solution was prepared by immersing an iron plate in water. Thereafter, the resulting pellets were dried to a water content of not higher than 0.3 wt.%. Thus, EVOH resin composition pellets were produced, which contained 40 ppm of the iron compound on a metal basis and 46 ppm of the phosphoric acid (B) on a phosphorus basis.

The proportion of the iron compound present in the EVOH resin composition pellets was measured in the following manner. After 10 ml of dilute sulfuric acid was added to 1 g of the EVOH resin composition pellets thus produced, the resulting mixture was heated at 250°C on a hot plate for 1 hour. Then, the mixture was further heated on an electric stove for 2 hours, and then heated at 700°C in an electric furnace for 4 hours. After the resulting sample was transferred from the electric furnace to the electric stove, 2 ml of hydrochloric acid and 3 to 4 ml of distilled water were added to the sample and boiled. The resulting sample was put in a measuring flask, and diluted with distilled water. Then, a sample solution thus prepared was analyzed by an atomic spectrophotometer (Z-2300 available from Hitachi, Ltd.)

The proportion of the phosphoric acid (B) present in the EVOH resin composition pellets was measured in the following manner. After the EVOH resin composition pellets were treated with nitric acid and sulfuric acid, the resulting product was analyzed by the molybdenum blue absorption photometry. More specifically, 10 ml of 60 wt.% nitric acid aqueous solution and 2 ml of 96 wt.% sulfuric acid aqueous solution were added to 1 g of the EVOH resin composition pellets, and the resulting mixture was heated by a gas burner until emanation of white fume of sulfuric acid. Then, 10 ml of pure water and 1 ml of a 36 wt.% hydrochloric acid aqueous solution were added to the resulting sample, and the resulting solution was diluted to a volume of 100 ml. Thereafter, one droplet of p-nitrophenol was added as an indicator to 40 ml of the resulting sample solution, and a 25 wt.% sodium hydroxide aqueous solution was added dropwise to the sample solution until the sample solution turned yellow to be neutralized. Further, 2 ml of an aqueous solution containing 24 mg of ascorbic acid and 20 mg of hexaammonium heptamolybdate tetrahydrate was added to the resulting sample solution, which was in turn diluted to a volume of 100 ml with pure water. Then, the resulting sample solution was allowed to stand still at 40°C for 15 minutes. The absorbance of the sample solution was measured at 875 nm, and the phosphoric acid concentration of the solution was determined based on the absorbance of a standard sample. The phosphoric acid concentration was finally converted to the phosphorus content (ppm) of the EVOH resin composition pellets.

Subsequently, 6.57 to 6.77 mg of an EVOH resin composition (sample) was cut out of the EVOH resin composition pellets produced in the aforementioned manner, and crushed by a hand press. Then, the crushed EVOH resin composition sample was sandwiched between two aluminum plates (plates of pure aluminum A1050P each having a width of 3 cm, a length of 10 cm and a thickness of 0.3 mm) at a position spaced 1.5 cm from a longitudinal edge and spaced 1.5 cm from a widthwise edge, and then heat-pressed at a temperature of 230°C at a pressure of 3.06 kg/cm$^2$ for a press period of 30 seconds (with a preheating period of 3 minutes and a cooling period of 1 minute) by a heat press. Thus, the aluminum plates and the EVOH resin composition sample were bonded to each other.

The aluminum plates were separated from each other at a position spaced 1.5 cm from the EVOH resin composition sandwiching position toward the center, and pulled away from each other at a pulling speed of 300 mm/minute by means of AUTOGRAPH AGS-H available from Shimadzu Corporation. Then, the peeling strength (adhesive force) between the EVOH resin composition sample and the aluminum plates was determined as an average of tensile force values observed until delamination.

The results are shown in Table 1.

<Example 2>

An EVOH resin composition was produced in substantially the same manner as in Example 1, except that the iron compound was contained in a proportion of 6 ppm on a metal basis and the phosphoric acid (B) was contained in a proportion of 74 ppm on a phosphorus basis in the aqueous solution to be used for the immersion of the pellets of the EVOH resin (A). Then, the EVOH resin composition was evaluated in the same manner as in Example 1. The EVOH resin composition contained 5 ppm of the iron compound on a metal basis and 51 ppm of the phosphoric acid (B) on a phosphorus basis.

The results are shown in Table 1.

<Comparative Example 1>

An EVOH resin composition was produced in substantially the same manner as in Example 1, except that the iron compound was contained in a proportion of 6 ppm on a metal basis and the phosphoric acid (B) was not contained in the aqueous solution to be used for the immersion of the pellets of the EVOH resin (A). Then, the EVOH resin composition was evaluated in the same manner as in Example 1. The EVOH resin composition contained 5 ppm of the iron compound on a metal basis and 0 ppm of the phosphoric acid (B) on a phosphorus basis.

The results are shown in Table 1.

Table 1

| | Example 1 | Example 2 | Comparative Example 1 |
|---|---|---|---|
| Proportion (ppm) of iron compound (on metal basis) | 40 | 5 | 5 |
| Proportion (ppm) of phosphoric acid (B) (on phosphorus basis) | 46 | 51 | 0 |
| Adhesive force (N) with respect to aluminum plates | 121 | 111 | 69 |

As apparent from the results for Examples 1 and 2, the EVOH resin compositions of Examples 1 and 2 in which the proportions of the iron compound and the phosphoric acid (B) fall within the ranges specified by the present disclosure each had a higher adhesive force with respect to the aluminum plates. In contrast, the EVOH resin composition of Comparative Example 1 in which the proportion of the phosphoric acid (B) was 0 ppm had a significantly lower adhesive force.

While specific forms of the embodiments of the present disclosure have been shown in the aforementioned inventive examples, the inventive examples are merely illustrative of the disclosure but not limitative of the disclosure. It is contemplated that various modifications apparent to those skilled in the art could be made within the scope of the disclosure.

The inventive EVOH resin composition has an excellent adhesive property with respect to the metal surface and, therefore, can be advantageously used as a surface coating material for coating various pipes for supplying oil, gas, water, and the like, and metal products for civil engineering construction materials.

## Claims

1. An ethylene-vinyl alcohol copolymer composition comprising:

    (A) an ethylene-vinyl alcohol copolymer;
    (B) a phosphoric acid compound; and

    an iron compound;
    wherein the iron compound is present in a proportion of 0.01 to 100 ppm on a metal basis based on weight of the ethylene-vinyl alcohol copolymer composition; and
    wherein the phosphoric acid compound (B) is present in a proportion of 1 to 100 ppm on a phosphorus basis based on weight of the ethylene-vinyl alcohol copolymer composition.

2. The ethylene-vinyl alcohol copolymer composition according to claim 1, wherein the phosphoric acid compound (B) is at least one of phosphoric acid and a phosphate.

3. A multilayer structure comprising a laminate unit including at least a layer comprising the ethylene-vinyl alcohol copolymer composition according to claim 1 or 2, and a layer comprising a metal component as a main component.

4. A hot-water sterilizable package that comprises the multilayer structure according to claim 3.

## Patentansprüche

1. Ethylen-Vinyl-Alkoholcopolymerzusammensetzung, aufweisend:

    (A) ein Ethylen-Vinyl-Alkoholcopolymer;
    (B) eine Phosphorsäureverbindung; und

    eine Eisenverbindung;
    wobei die Eisenverbindung in einem Anteil von 0,01 bis 100 ppm auf einer Metallbasis auf Basis des Gewichts der Ethylen-Vinyl-Alkoholcopolymerzusammensetzung vorhanden ist; und
    wobei die Phosphorsäureverbindung (B) in einem Anteil von 1 bis 100 ppm auf einer Phosphorbasis auf Basis des Gewichts der Ethylen-Vinyl-Alkoholcopolymerzusammensetzung vorhanden ist.

**2.** Ethylen-Vinyl-Alkoholcopolymerzusammensetzung nach Anspruch 1, wobei die Phosphorsäureverbindung (B) zumindest eines von Phosphorsäure und einem Phosphat ist.

**3.** Mehrschichtige Struktur, aufweisend eine Laminateinheit, die zumindest eine Schicht, die die Ethylen-Vinyl-Alkoholcopolymerzusammensetzung nach Anspruch 1 oder 2 aufweist, und eine Schicht, die einen Metallbestandteil als einen Hauptbestandteil aufweist, beinhaltet.

**4.** Heißwassersterilisierbare Verpackung, die die mehrschichtige Struktur nach Anspruch 3 aufweist.

## Revendications

**1.** Composition de copolymère d'éthylène-alcool vinylique comprenant :

(A) un copolymère d'éthylène-alcool vinylique ;
(B) un composé d'acide phosphorique ; et

un composé de fer ;
dans laquelle le composé de fer est présent dans une proportion de 0,01 à 100 ppm sur une base de métal rapportée à la masse de la composition de copolymère d'éthylène-alcool vinylique ; et
dans laquelle le composé d'acide phosphorique (B) est présent dans une proportion de 1 à 100 ppm sur une base de phosphore rapportée à la masse de la composition de copolymère d'éthylène-alcool vinylique.

**2.** Composition de copolymère d'éthylène-alcool vinylique selon la revendication 1, dans laquelle le composé d'acide phosphorique (B) est au moins un d'acide phosphorique et d'un phosphate.

**3.** Structure multicouche comprenant une unité stratifiée incluant au moins une couche comprenant la composition de copolymère d'éthylène-alcool vinylique selon la revendication 1 ou 2, et une couche comprenant un constituant de métal comme un constituant principal.

**4.** Emballage stérilisable à l'eau chaude qui comprend la structure multicouche selon la revendication 3.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012206318 A

- WO 2011122036 A